# EUROPÄISCHE PATENTSCHRIFT

(11) **EP 1 083 479 B1**
(45) Veröffentlichungstag und Bekanntmachung des Hinweises auf die Patenterteilung: **16.10.2013**
(21) Anmeldenummer: 00117263.4
(22) Anmeldetag: 16.08.2000
(51) Int. Cl.: H04M 1/60, G06F 3/16, G10L 15/26

(54) **Verfahren zum Betrieb einer sprachgesteuerten Befehlseingabeeinheit in einem Kraftfahrzeug**
Operation method for a voice controlled input device in an automotive vehicle
Méthode d'opération d'un dispositif d'entrée de commandes vocales dans une vehicule automobile

(30) Priorität: 08.09.1999 DE 19942871
(43) Veröffentlichungstag der Anmeldung: 14.03.2001
(73) Patentinhaber: Volkswagen Aktiengesellschaft, 38440 Wolfsburg (DE)
(72) Erfinder: Wengelnik, Heino, Dr., 38440 Wolfsburg (DE); Tontch, Kilian, Dipl.-Ing., 38440 Wolfsburg (DE)

(56) Entgegenhaltungen:
- EP-A- 1 020 789
- WO-A-99/01831
- DE-A- 19 711 365
- "INTEGRATED AUDIO-GRAPHICS USER INTERFACE" IBM TECHNICAL DISCLOSURE BULLETIN,US,IBM CORP. NEW YORK, Bd. 33, Nr. 11, 1. April 1991 (1991-04-01), Seiten 368-371, XP000110434 ISSN: 0018-8689
- "USER INTERFACE SHORTCUT" IBM TECHNICAL DISCLOSURE BULLETIN,US,IBM CORP. NEW YORK, Bd. 33, Nr. 3A, 1. August 1990 (1990-08-01), Seiten 413-414, XP000120530 ISSN: 0018-8689

## Beschreibung

Die Erfindung betrifft ein Verfahren zum Betrieb einer sprachgesteuerten Befehlseingabeeinheit in einem Kraftfahrzeug, bei welcher die Bedienbarkeit akustisch menügeführt wird, indem vor geräte- oder funktionsbezogener Befehlseingabe zunächst die Befehlsebene, d. h. das Gerät oder die Einheit, die aktiviert werden soll, sprachangesteuert wird, gemäß Oberbegriff des Patentanspruches 1.

Spracheingabegesteuerte Einrichtungen sind zur Verwendung in Kraftfahrzeugen bekannt. Der Fahrzeugführer oder ein Fahrzeuginsasse kann dabei durch Verwendung vorher festgelegter Befehlsworte gewisse Ansteuerfunktionen bei Geräten sprachgesteuert auslösen. Hierzu sind in den meisten Fällen vorab Befehlsworte programmiert, zu denen entsprechende Sprachmuster abgelegt sind. Da jede Person eine andere Stimme hat, müssen bei der Spracherkennung stimmindividualitätsunabhängige Spezifika der Befehlsworte erkennbar sein. Hierzu werden Mustervergleiche durchgeführt, um aus jeder Stimmcharakteristik das entsprechende Befehlswort auch identifizieren zu können. Hierzu sind vielfach aufwendige Verfahren eingesetzt. Dabei unterscheidet man zwischen phonem-gestützter Spracherkennung, die sogar Einzellaute auswertet, und sogenannte Template-Verfahren, bei denen Sprachmuster ganzer Worte hinterlegt sind. Nachteilig ist bei solchen Templateverfahren, dass man für jeden Befehl Sprachdaten braucht. Hierbei gibt es wortbasierte Erkennung, die zwar sprecherunabhängig ist, dafür muss sie mit 200 Sprechern trainiert werden. Aus der US 4 870 686 ist eine sprachgesteuerte Eingabe über phonetische Worterkennung sogenannter Templates bekannt. Hierbei wird die Telefonanlage hierüber gesteuert. Insbesondere ist dabei vorgesehen, auch eine Korrekturmöglichkeit zuzulassen, über welche die jeweils letzt eingegebene Ziffer korrigiert werden kann.

Aus der DE 42 16 455 ist eine sprachgesteuerte Eingabe mit einem Befehlswörterbuch angegeben. Hierbei sind die Sprachbefehle vorher festgelegt und in dem besagten Befehlswörterbuch als Sprachmuster abgelegt. Auch hierbei ergeben sich die oben bereits ausgeführten Nachteile einer solchen Ganzwortbewertung.

In der US 4 593 403 ist eine Programmiermöglichkeit einer sprachgesteuerten Eingabe offenbart, wobei die Programmierung über Zuhilfenahme von Tasten erfolgt. Hierbei können neue Befehlsworte eingegeben werden und durch die haptische Betätigung der Tasten diese Befehlsworte den Tasten und damit den hinterlegten Funktionen zugewiesen werden. Bei der Programmierung solcher Funktionen ist eine als Quittiertaste vorgesehene Programmiertaste vorgesehen, die immer dann gedrückt wird, wenn das erfaßte Befehlswort der entsprechenden Funktion zugewiesen werden soll.

Die DE 197 11 365 A1 offenbart ein Autoradio, das eine vereinfachte Spracheingabe ermöglicht. Dazu umfasst das Autoradio eine Möglichkeit zur Spracheingabe über ein Mikrophon und ein Modul zur Sprachauswertung. Weiterhin ist eine Anzeigevorrichtung vorgesehen, mittels der eine Bedienoberfläche darstellbar ist. Einzelnen an der Bedienoberfläche dargestellten Bedienfunktionen sind einsilbige Positionsindikatoren zugeordnet, so dass die Bedienfunktionen durch Spracheingabe der zugehörigen Positionsindikatoren aktivierbar sind.

Die WO 99/01831 offenbart ein windowsbasiertes Rechnersystem mit Mitteln zur Überwachung aller eingegebenen oder von einem Benutzer ausgewählter Daten, wobei die Daten einen oder mehrere alphabetische Buchstaben, Symbole oder Wörter umfassen, wobei bestimmte Kombinationen von Daten Befehlswörter repräsentieren, und wobei diese Daten in jeglicher einer Vielzahl von Anwendungen innerhalb der Betriebssystemumgebung eingegeben werden können. Darüber hinaus umfasst das Computersystem eine Wörterdatenbasis, in der Befehlswörter und zugeordnete auszuführende Funktionen abgespeichert sind.

Der Erfindung liegt die Aufgabe zugrunde, ein Verfahren der gattungsgemäßen Art dahingehend weiterzubilden, daß eine bessere schnellere Sprachbedienung von Geräten in einem Kraftfahrzeug ermöglicht.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahrens sind in den Ansprüchen 2-8 angegeben. Dabei sind interdisziplinäre (Sprach-)Shortcut-Befehle vorgesehen, welche auch während der Betriebsphase einer aktivierten Befehlsebene einen zumindest temporären Wechsel in eine andere, noch nicht aktivierte Befehlsebene zulassen. Dies hat im Hinblick auf einen hohen Benutzerkomfort große Vorteile. Beispielsweise kann während des aktiven sprachgesteuerten Betriebes der Navigationseinheit das Telefon klingeln. Der Bediener kann nun, ohne das Navigationssystem oder die Navigationsbefehlsebene verlassen zu müssen, durch einen übergeordneten interdisziplinären Shortcut-Befehl, welchen er ebenfalls sprachgesteuert eingibt, den Anruf entgegennehmen. Nach Beendigung des Telefonanrufes kann er das Telefonat auch wiederum spracheingabegesteuert quittieren oder beenden und zu dem letzt eingestellten Betätigungsstatus des Navigationssystems zurückkehren, ohne daß er sich umständlich wieder von oben, also von der jeweiligen Befehlsebene beginnend, menügesteuert an die zuletzt verlassene Stelle im Navigationssystem hinarbeiten müßte.

In weiterer vorteilhafter Ausgestaltung ist vorgesehen, daß mittels übergeordneter Shortcut-Befehle mehrere, jeweils Geräten zugeordnete Befehlsebenen gleichzeitig aktiv sein können. Damit können auch mehrere Befehlsebenen gemeint sein und nicht nur das oben genannte Betriebsbeispiel. Weiterhin ist vorgesehen, daß Shortcut-Befehle vorhanden sein können, mit welchen die Befehlsebenen abrupt, d. h. in einem Schritt geschlossen werden können. Ein solcher Shortcut-Befehl kann entweder "abbrechen" oder "schließen" sein. Das heißt, der Bediener muß nicht die Menüstruktur bis zum Menüende zurück, um alle Einzelprogrammschritte und Programmabzweigungen jeweils für sich zu schließen, sondern er kann das im Moment aktive Menü durch einen einzigen Shortcut-Befehl verlassen und sogar im selben Schritt über den besagten Shortcut sogar bis an eine gewünschte Stelle in einem anderen Menü gelangen.

Weiterhin kann vorteilhaft vorgesehen sein, daß Shortcut-Befehle zur Entgegennahme von ankommenden Telefonaten vorgesehen sind, die auch dem Telefonieren für sich übergeordnete Funktionsbefehle zuweisen.

Weiterhin ist vorteilhaft vorgeschlagen, daß Shortcut-Befehle zur Ansteuerung der Audioanlage vorgesehen sind. Dazu gehören neben der Ansteuerung der Senderwahl auch übergeordnete Funktionen wie laut oder leise.

Wie oben bereits ausgeführt, können auch mehrere Befehlsebenen gleichzeitig aktiviert sein und so lange bleiben, bis ein abschließender Sprachbefehl zur jeweiligen Befehlsebene eingegeben wird.

Weiterhin kann vorteilhafterweise vorgesehen sein, daß auch Shortcut-Befehle zusätzlich über Tastendruck auslösbar sind. Somit entsteht eine gute und unmißverständliche Unterstützung der Spracheingabelogik, ohne daß dem Fahrer oder dem Bediener die Vorteile einer sprachgesteuerten Befehlseingabe verlorengehen würden.

Ein Ausführungsbeispiel der verfahrensgemäßen Erfindung ist aus der Darstellung einer möglichen Menüstruktur entnehmbar.

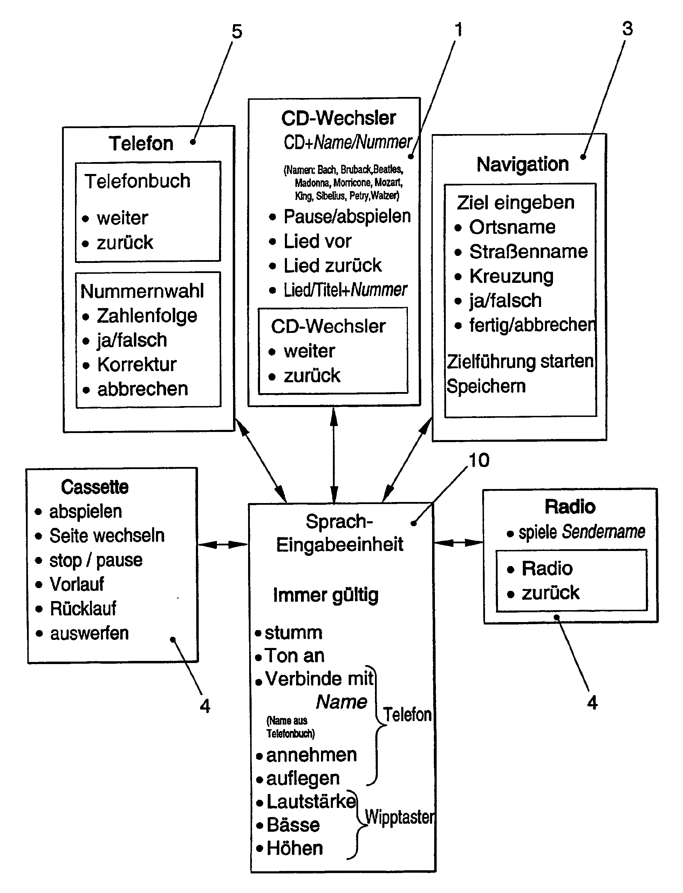

Die Abbildung zeigt die einzelnen Elemente bzw. die einzelnen Geräteelemente, die über eine zentrale Spracheingabeeinheit angesteuert werden. Unter den einzelnen Geräten befinden sich CD-Wechsler 1, Radio 2, Navigationseinheit 3, Kassettenabspielgerät 4 sowie die Telefonanlage 5. Jedem einzelnen Gerät ist ein Menü oder anders gesagt, ein Befehlsmenü zugeordnet, welche beispielsweise den Namen oder die Bezeichnung des Gerätes meint. Das heißt, daß wenn der Bediener ein bestimmtes Gerät über die Spracheingabeeinheit 10 ansprechen will, er zunächst dessen Menü verbal benennen muß, beispielsweise "Navigation". Wird dieser Begriff bzw. dieser Sprachbefehl eingegeben und dieses Menü aktiviert, dann steuert die Spracheingabeeinheit das Navigationssystem an. Hierzu gibt es bestimmte Befehle wie "Ziel eingeben", wobei bei der Eingabe dieses Sprachbefehles weitere Befehlsebenen untergeordnet, entweder abgefragt werden oder eingebbar sind. Dazu gehören Ortsnamen, Straßennamen, Kreuzung, ja, falsch, fertig, abbrechen. Die Navigationseinheit kann auch im Modus "Zielführung starten" betrieben werden. Eine weitere Funktion ist sprachgesteuert implementiert, nämlich die Funktion des Speicherns einkommender Navigationsdaten.

In allen Fällen werden die Geräte durch die verbale Benennung zunächst der ersten Befehlsebene des entsprechenden Menüs aktiviert, und dann erfolgt die Auswahl der Funktionen menügeführt, wie dies die Abbildung zeigt.

Nebengeordnet sind in der Spracheingabe aber die sog., wie oben bereits beschriebenen Shortcut-Befehle. Diese Befehle ermöglichen einen interdisziplinären Wechsel beispielsweise zwischen Telefon und Navigationseinheit oder Telefon und CD-Wechsler usw. Wird beispielsweise die Navigationseinheit betrieben und befindet sich der Bediener irgendwo mitten in der Menüführung und kommt zu diesem Zeitpunkt ein Telefonanruf an, so kann durch die Wahl der Befehlseingabe "annehmen" das Gespräch angenommen werden, ohne daß der Bediener die Navigationseinrichtung schließen muß. Wichtig ist hierbei anzumerken, daß die Telefonatentgegennahme durch einen Sprachbefehl, nämlich durch das Wort "annehmen" ausgelöst wird, während dem die Navigationseinheit sprachbefehlsgesteuert noch geöffnet ist. Weitere Funktionen wie "auflegen", "verbinde mit..." können dabei weitere Shortcut-Befehle sein, die in dem Sprachwörterbuch der Telefonanlage als solches nicht enthalten sind und erst gebraucht werden, wenn ein solcher interdisziplinärer Zugriff zwischen den Geräten vorgenommen wird. Weitere interdisziplinäre Befehle können sein "stumm" oder "Ton an", oder "leiser", "lauter" und dergleichen mehr. Ebenso ist eine Zuhilfenahme haptischer Befehlseingabe über Taster möglich, die nicht das Schließen einer geöffneten Befehlsebene bedingen. Auch hierbei ist es nicht notwendig, die geöffnete Befehlsebene zuerst zu schließen, um in eine andere zu kommen.

## Patentansprüche

1. Verfahren zum Betrieb einer sprachgesteuerten Befehlseingabeeinheit in einem Kraftfahrzeug, bei welcher die Bedienbarkeit akustisch menügeführt wird, indem vor geräte- oder funktionsbezogener Befehlseingaben zunächst das Gerät, das aktiviert werden soll, zum Aufruf der ersten Befehlsebene seines Menüs verbal benannt wird,
**dadurch gekennzeichnet,**
**dass** interdisziplinäre Sprach-Shortcut-Befehle vorgesehen sind, welche auch während der Betriebsphase eines aktivierten Menüs einen temporären Wechsel in ein anderes, noch nicht aktiviertes Menü eines anderen Gerätes generieren lassen.

2. Verfahren nach Anspruch 1,
**dadurch gekennzeichnet,**
**dass** mittels übergeordneter Sprach-Shortcut-Befehle mehrere, jeweils gerätezugeordnete Menüs gleichzeitig aktiv sind.

3. Verfahren nach Anspruch 1 oder 2,
**dadurch gekennzeichnet,**
**dass** Sprach-Shortcut-Befehle vorgesehen sind, mit welchen Menüs abrupt, d. h. in einem Schritt geschlossen werden können.

4. Verfahren nach einem der vorhergehenden Ansprüche,
**dadurch gekennzeichnet,**
**dass** Sprach-Shortcut-Befehle zur Entgegennahme von ankommenden Telefonaten vorgesehen sind.

5. Verfahren nach einem der vorhergehenden Ansprüche,
**dadurch gekennzeichnet,**
**dass** Sprach-Shortcut-Befehle zur Ansteuerung der Audioanlage vorgesehen sind.

6. Verfahren nach einem der vorhergehenden Ansprüche,
**dadurch gekennzeichnet,**
**dass** Sprach-Shortcut-Befehle zum Ad-hoc-Wechsel zwischen verschiedenen Menüs bzw. zwischen verschiedenen Befehlsebenen verschiedener Menüs vorgesehen sind.

7. Verfahren nach einem der vorhergehenden Ansprüche,
**dadurch gekennzeichnet,**
**dass** mehrere Befehlsebenen gleichzeitig aktiviert sein können und so lange bleiben, bis ein abschließender Sprachbefehl zur jeweiligen Befehlsebene eingegeben wird.

8. Verfahren nach einem der vorhergehenden Ansprüche,
**dadurch gekennzeichnet,**
**dass** Shortcut-Befehle zusätzlich über Tastendruck auslösbar sind.

## Claims

1. Method for operating a voice-controlled command input unit in a motor vehicle, in which the operation is menu-driven on an audible basis by virtue of appliance-related or function-related command inputs being preceded first of all by verbal nomination of the appliance that is intended to be activated in order to call the first command level and its menu,
**characterized**
**in that** interdisciplinary voice shortcut commands are provided that allow the generation of a temporary change to another, as yet unactivated, menu on another appliance even during the operating phase of an activated menu.

2. Method according to Claim 1,
**characterized**
**in that** the use of superordinate voice shortcut commands means that a plurality of respectively appliance-associated menus are simultaneously active.

3. Method according to Claim 1 or 2,
**characterized**
**in that** voice shortcut commands are provided that can be used to close menus abruptly, i.e. in one step.

4. Method according to one of the preceding claims,
**characterized**
**in that** voice shortcut commands are provided for taking incoming telephone calls.

5. Method according to one of the preceding claims,
**characterized**
**in that** voice shortcut commands are provided for actuating the audio installation.

6. Method according to one of the preceding claims,
**characterized**
**in that** voice shortcut commands are provided for changing between different menus or between different command levels of different menus on an add-hoc basis.

7. Method according to one of the preceding claims,
**characterized**
**in that** a plurality of command levels may have been activated simultaneously and can remain activated until a final voice command for the respective command level is input.

8. Method according to one of the preceding claims,
**characterized**
**in that** shortcut commands can additionally be initiated by pushing a key.

## Revendications

1. Procédé d'utilisation d'une unité de saisie d'instructions à commande vocale dans un véhicule automobile, selon lequel l'aptitude à l'utilisation est guidée de manière sonore par un menu en nommant tout d'abord verbalement l'appareil qui doit être activé en vue d'invoquer le premier niveau d'instructions de son menu avant les saisies d'instructions en rapport avec l'appareil ou la fonction, **caractérisé en ce que** des instructions vocales raccourcies interdisciplinaires sont prévues, lesquelles permettent de générer un transfert temporaire dans un autre menu non encore activé d'un autre appareil même pendant la phase d'utilisation d'un menu activé.

2. Procédé selon la revendication 1, **caractérisé en ce que** plusieurs menus, respectivement associés à l'appareil, sont activés simultanément au moyen d'instructions vocales raccourcies de niveau supérieur.

3. Procédé selon la revendication 1 ou 2, **caractérisé en ce que** sont prévues des instructions vocales raccourcies avec lesquelles les menus peuvent être fermés brutalement, c'est-à-dire en une seule étape.

4. Procédé selon l'une des revendications précédentes, **caractérisé en ce que** sont prévues des instructions vocales raccourcies pour accepter des appels téléphoniques entrants.

5. Procédé selon l'une des revendications précédentes, **caractérisé en ce que** sont prévues des instructions vocales raccourcies pour commander l'équipement audio.

6. Procédé selon l'une des revendications précédentes, **caractérisé en ce que** sont prévues des instructions vocales raccourcies pour basculer expressément entre différents menus ou entre différents niveaux d'instructions de différents menus.

7. Procédé selon l'une des revendications précédentes, **caractérisé en ce que** plusieurs niveaux d'instructions peuvent être activés simultanément et le restent jusqu'à ce qu'une instruction vocale de clôture soit saisie pour le niveau d'instructions correspondant.

8. Procédé selon l'une des revendications précédentes, **caractérisé en ce que** des instructions raccourcies peuvent en plus être déclenchées par une pression sur une touche.
